(19) Europäisches Patentamt / European Patent Office / Office européen des brevets

(11) **EP 2 353 146 B1**

(12) **EUROPÄISCHE PATENTSCHRIFT**

(45) Veröffentlichungstag und Bekanntmachung des Hinweises auf die Patenterteilung:
**22.08.2012 Patentblatt 2012/34**

(21) Anmeldenummer: **09801918.5**

(22) Anmeldetag: **11.11.2009**

(51) Int Cl.:
*G06T 7/00* *(2006.01)*      *G06T 7/60* *(2006.01)*

(86) Internationale Anmeldenummer:
**PCT/DE2009/001601**

(87) Internationale Veröffentlichungsnummer:
**WO 2010/063252 (10.06.2010 Gazette 2010/23)**

(54) **VERMESSUNG DES WACHSTUMS VON BLATTSCHEIBEN VON PFLANZEN**

MEASURING THE GROWTH OF LEAF DISKS OF PLANTS

MESURER LA CROISSANCE DE DISQUES DE FEUILLE DE PLANTES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **03.12.2008 DE 102008060141**

(43) Veröffentlichungstag der Anmeldung:
**10.08.2011 Patentblatt 2011/32**

(73) Patentinhaber: **Forschungszentrum Jülich GmbH 52425 Jülich (DE)**

(72) Erfinder:
- **BISKUP, Bernhard 53797 Lohmar (DE)**
- **FISCHBACH, Andreas 52428 Jülich (DE)**
- **SCHARR, Hanno 52428 Jülich (DE)**

(56) Entgegenhaltungen:
- **ACHIM WALTER ET AL.: "Dynamics of seedling growth acclimation towards altered light conditions can be quantified via GROWSCREEN: a setup and procedure designed for rapid optical phenotyping of different plant species" NEW PHYTOLOGIST, Bd. 174, Nr. 2, 2. Februar 2007 (2007-02-02), Seiten 447-455, XP7912125 DOI: 10.1111/j.1469-8137.2007.02002.x**
- **BERNHARD BISKUP, HANNO SCHARR, ULRICH SCHURR, UWE RASCHER: "A stereo imaging system for measuring structural parameters of plant canopies" PLANT, CELL & ENVIRONMENT, Bd. 30, Nr. 10, 4. Juli 2007 (2007-07-04), Seiten 1299-1308, XP7912123 ISSN: 0140-7791 DOI: 10.1111/j.1365-3040.2007.01702.x**
- **BISKUP B, SCHARR H, FISCHBACH A, WIESE-KLINKENBERG A, SCHURR U, WALTER A: "Diel growth cycle of isolated leaf discs analyzed with a novel, high-throughput three-dimensional imaging method is identical to that of intact leaves" PLANT PHYSIOLOGY, Bd. 149, Nr. 3, 23. Januar 2009 (2009-01-23), Seiten 1452-1461, XP007912120 DOI: 10.1104/pp.108.134486**

**Beschreibung**

Die Erfindung betrifft ein Verfahren zur Vermessung des Wachstums von Blattscheiben sowie eine dazu geeignete Vorrichtung.

Pflanzenwachstum ist ein wichtiges Züchtungsmerkmal und von ebenso großem Interesse bei der Untersuchung von Stoffwechselvorgängen und dem Einfluss von Wirkstoffen auf das Wachstum.

Die Verwendung von ganzen Pflanzen hat einen hohen Flächenbedarf zur Folge. Zudem eignen sich nur bestimmte Wuchsformen (v. a. Rosettenpflanzen; Walter et al. 2007) für die Vermessung von ganzen Blättern. Mit zunehmendem Alter der Pflanzen beschränken zunehmende Verdeckungen solche Verfahren auf sehr junge Stadien der Pflanzen.

Alternativ zu ganzen Pflanzen werden nach dem Stand der Technik auch ausgestanzte Blattscheiben eingesetzt. Ausgestanzte Blattscheiben wachsen in geeigneten Nährlösungen noch tagelang (Walter 2000). Dadurch ist die Platz sparende Messung des Wachstums zahlreicher Pflanzen im Hochdurchsatz möglich. Zudem erlauben Blattscheiben die einfache Anwendung von Wirkstoffen.

Herkömmliche Verfahren zur optischen Messung des Blattwachstums verwenden i. d. R. ganze Pflanzen. Die optische Bestimmung der Oberfläche einzelner Pflanzen erfolgt entweder in 2 Dimensionen, d.h. durch Vermessung der projizierten Blattfläche (Granier et al. 2006; Walter et al. 2007) oder in 3 Dimensionen, d.h. auf einem mit Laserscanner oder Stereokamera gewonnenen Oberflächenmodell (Kaminuma et al. 2004). Zudem existieren kommerziell verfügbare Systeme zur Vermessung der Fläche von Blattscheiben, die auf einem festen Untergrund liegen (z. B. LemnaTec GmbH). Letztere dienen z. B. der Quantifizierung von Fraßschäden durch Herbivore oder von durch Pilzkrankheiten verursachte Schäden.

Blattscheiben müssen für Wachstumsexperimente frei in Lösung schwimmen, da eine feste Unterlage das Wachstum stark beeinträchtigt. Das Absinken des Flüssigkeitsspiegels im Verlauf des Experiments führt zu einer Verringerung der projizierten Fläche, dem die tatsächliche Flächenzunahme überlagert ist. Herkömmliche optische Vermessungsverfahren in 2D sind daher nicht in der Lage, die tatsächliche Wuchsrate zu bestimmen. Für Blattscheiben mit großen Wuchsraten führt das Absinken des Flüssigkeitsspiegels lediglich zu einer Unterschätzung der tatsächlichen Wuchsraten. Für Blattscheiben mit geringeren Wuchsraten (mit einem Betrag in der Größenordnung des durch das Absinken gemessenen scheinbar negativen Wachstums) ist überhaupt keine sinnvolle Messung möglich. Da viele Pflanzen ausgeprägte Tagesgänge des Wachstums aufweisen, ist die Messung der tatsächlichen Wuchsraten von immenser Bedeutung.

Bei schräg gestellten oder gewölbten Blattscheiben (letzteres tritt z. B. unter Wirkung von Phytohormonen auf) kommt es zu einer geringer projizierten Fläche. So ist ebenfalls die Messung von Wachstum mit Nicht-Stereo-Verfahren unmöglich.

Es ist daher Aufgabe der Erfindung, ein Verfahren zu schaffen, mit dem es möglich ist, das Wachstum (d.h. den Flächenzuwachs von Blattscheiben) genau zu vermessen und tageszeitliche Dynamiken des Wachstums aufzulösen. Es ist weiterhin Aufgabe der Erfindung, standardisierte Wachstumsmessungen an einer breiten Palette von Pflanzenarten durchführen zu können.

Ausgehend vom Oberbegriff des Anspruchs 1 wird die Aufgabe erfindungsgemäß gelöst mit den im kennzeichnenden Teil des Anspruchs 1 angegebenen Merkmalen.

Es hat sich gezeigt, dass es mit dem erfindungsgemäßen Verfahren und der Vorrichtung möglich wird, Wachstumsmessungen im Hochdurchsatz mit Probenmengen von beispielsweise ca. 500 Blattscheiben durchzuführen und dabei das Wachstum und die tageszeitliche Dynamik des Wachstums in Abständen von ca. 1 bis 1,5 Stunden zu erfassen bzw. aufzulösen. Das erfindungsgemäße Verfahren und die Vorrichtung ermöglichen eine bezogen auf die Zeit hoch auflösende Analyse des Wachstums von Blattscheiben. Das Verfahren und die Vorrichtung können nach Einstellung und Kalibrierung ohne eine weitere Betreuung und ohne Personaleinsatz automatisiert über 2-5 Tage bis zu ca. 2 Wochen betrieben werden.

Durch das erfindungsgemäße Verfahren und die Vorrichtung ist es möglich, die tatsächliche (bezogen auf die optische Erfassung) Wuchsrate von Pflanzen auf Basis von Blattscheiben zu ermöglichen. Dies war bisher mit den nach dem Stand der Technik bekannten optischen Vermessungsverfahren nicht möglich.

Die vorliegende Erfindung betrifft ein Verfahren zur Vermessung des Wachstums von Blattscheiben, gekennzeichnet durch folgende Verfahrensschritte:

**1. Kalibrierung des Aufnahmesystems:**

Die Kalibrierung der Kamera kann mit einem Standardverfahren nach z. B. Bouguet 2005 erfolgen. Andere nach dem Stand der Technik bekannte Verfahren sind jedoch ebenfalls möglich. Eine gesonderte Stereo-Kalibrierung ist nicht notwendig, weil die relative Lage der Kamerapositionen vorgegeben ist. Die Kenntnis der Kalibrierparameter ist für die anschließende 3D-Rekonstruktion erforderlich. Die in diesem Schritt bestimmten Parameter sind: Brennweite, Hauptpunkt (= Schnittpunkt der optischen Achse mit der Bildebene), radiale und tangentiale Verzerrung.

**2. Bildaufnahme:**

Je nach gewähltem Stereoverfahren können entweder a) zwei Bilder für korrelationsbasierte Verfahren (Faugeras et al. 1996) oder b) > 2 Bilder für Verfahren, die den optischen Fluss mittels Ableitungsfiltern bestimmen (Scharr et al., 2007), pro Blattscheibe aufgenommen werden. Eine größere Anzahl von Bildern im Verfahren erlaubt eine deutliche Reduktion des systematischen Fehlers (Scharr, 2004). Eine hinreichend kleine Stereo-Grundlinie wird realisiert, indem dieselbe Kamera mit einem dritten Verschiebetisch verschoben wird. Anstelle eines dritten Verschiebetischs können zwei Kameras verwendet werden. Als Kameras können beispielsweise Industriekameras oder Stereokameras eingesetzt werden.

**3. Bearbeitung der Bilddaten:**

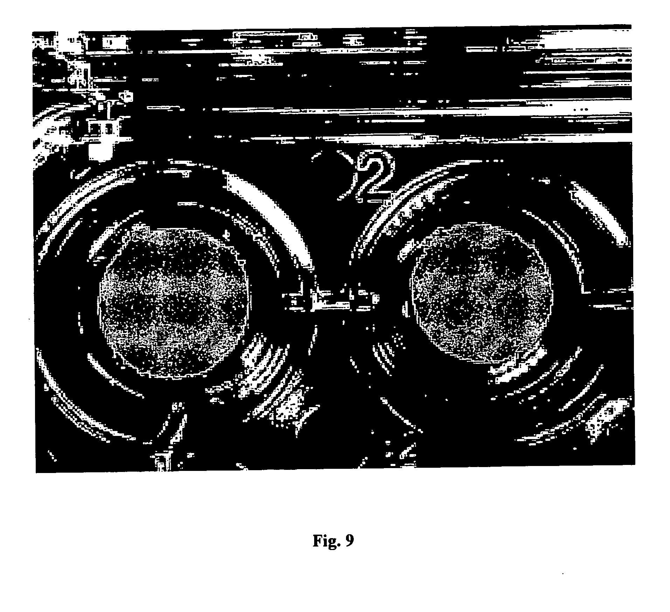

Für die Auswertung der Bilddaten müssen die Blattscheiben, die in Nährlösung frei schwimmen, vom Hintergrund separiert bzw. die Bilddaten der Blattscheiben segmentiert werden. Da ein Infrarotfilter verwendet wird, stehen zur Segmentierung nur Graustufen-Bilder zur Verfügung.
Zunächst. wird a) eine *Schwellwertsegmentierung* (z. B. Jähne, 2002) durchgeführt. Auch andere nach dem Stand der Technik bekannte Verfahren zur Schweilwertsegmentierung sind geeignet. Hierbei werden Pixel für Pixel ausgewählt und selektioniert nach Hintergrund- Blattscheibe.
Anschließend werden potentielle Blattscheiben identifiziert, indem zunächst Randbereiche (z. B. Gefäßwand, Reflexionen auf der Flüssigkeitsoberfläche) durch b) *mehrfache morphologische Erosionsschritte* entfernt werden und dann verbleibende Objekte mit einer minimalen Größe (in Pixeln) selektiert werden.
Anschließend erfolgt c) eine *Randbereinigung* bei der der Rand des Gefäßes, in dem sich die Blattscheibe befindet, ausselektioniert wird. (s. Fig. 9)

**4. 3D-Rekonstruktion:**

Mittels eines Stereo-Algorithmus (z. B. Biskup et al 2007) wird eine Disparitätskarte erstellt.
Im Zusammenhang mit Stereokamera, Stereosehen, Tiefenbildauswertung ist die Disparität oder auch Deviation der Offset in der Position, den das gleiche Objekt in der Abbildung auf zwei unterschiedlichen Bildebenen einnimmt. Die zu den Bildebenen gehörenden Brennpunkte sind dabei durch die Basis $b$ räumlich voneinander getrennt. Mit der Brennweite $f$ der beiden Linsen ergibt sich dann folgende Beziehung: $r = bf/D$, wobei $D$ für die Disparität steht. Man kann also den Abstand $r$ zu einem Objekt durch eine Messung der Disparitäten im Stereobild ermitteln.

**Nachbearbeitung Disparitätsbild**

Ausreißer, d.h. einzelne 3D-Punkte, die weit entfernt sind von Punkten der Umgebung, werden durch einen Medianfilter (z. B. Jähne, 2002) entfernt. Bereiche, an denen auf Grund von beispielsweise zu geringem Kontrast keine Disparitätsschätzung möglich ist, werden mittels normalisierter Faltung (Knutson & Westin, 1993) geschlossen. Anschließend wird anhand der zuvor bestimmten Kalibrierparameter aus der Disparitätskarte ein 3D-Oberflächenmodell berechnet (z. B. Jeness, 2004).

**5. Glättung und Messung der Oberfläche:**

Das zuvor gewonnene Oberflächenmodell wird geglättet über Gauß-Filterung des Z-Bildes (z. B. Jähne, 2002), um eine Überschätzung der Flächenmessung durch Rauschen zu verhindern.

**6. Wuchsraten:**

Relative Wuchsraten werden aus den Zeitreihen der Flächeninhalte bestimmt. Die gemessenen Wuchsraten werden in einer Datenbank zur weiteren Auswertung bereitgestellt.
Kern der Erfindung ist die Anwendung von Stereo-Bildgebung, mittels der ein 3D-Oberflächenmodell der Blattscheiben gewonnen wird, das eine genaue Vermessung der Fläche erlaubt.
Blattscheiben werden beispielsweise in Microtiter-Platten oder Petrischalen auf einer horizontalen Fläche gelagert. Mit Hilfe des Aufnahmesystems, bestehend aus mindestens einer Kamera, LED-Arrays und Verschiebetischen, erfolgt die optische Erfassung der Blattscheiben. Mit X-Y-Verschiebetischen kann das Kamerasystem über die jeweilige Blattscheibe positioniert werden. Das Kamerasystem besteht beispielsweise aus mehreren Infrarot-LED Beleuchtungsgruppen, welche die aufgenommene Pflanze homogen ausleuchten. Die Position der Beleuchtung bleibt stationär, während verschiedene Kamerapositionen mittels eines dritten Verschiebetischs angefahren werden. Die Beleuchtung für die Bildaufnahme erfolgt bevorzugt im Infrarotbereich, um eine physiologische Wirkung auf die Pflanzen zu vermeiden. Entsprechend ist die Kamera mit einem Infrarot-Filter ausgestattet, um eine möglichst konstante Beleuchtungsintensität unabhängig von der Außenbeleuchtung zu gewährleisten. Die photosynthetisch aktive Beleuchtung kann in einem definierten Tag-Nacht-Zyklus durch Leuchtstoffröhren oder andere Lichtquellen, die photosynthetisch verwertbare Wellenlängen emittieren, erfolgen. Das Verfahren kann in einer Klimakammer durchgeführt werden, um definierte Temperatur und Luftfeuchtigkeit sicherzustellen.

Das erfindungsgemäße Verfahren ermöglicht die gleichzeitige Vermessung von beispielsweise ca. 500 Blattscheiben. Experimente mit unterschiedlichen Wirkstoffen haben gezeigt, dass im Fall geringer Wuchsraten unter Herbizidwirkung das erfindungsgemäße Verfahren korrekte (d.h. nicht durch Projektionseffekte verfälschte) Wuchsraten bestimmt. Bei Verwendung der projizierten Fläche ergab sich dagegen unter Herbizidwirkung ein scheinbar negatives Wachstum.

Mit Hilfe eines Förderbandes kann beispielsweise die Anzahl der zyklisch vermessenen Microtiterplatten erhöht werden.

Mit Hilfe einer Aufbewahrungsvorrichtung für Microtiterplatten und eines Roboterarms kann beispielsweise die Anzahl der zyklisch vermessenen Microtiterplatten erhöht werden.

Anstelle einer großen und teuren Klimakammer kann die erfindungsgemäße Vorrichtung beispielsweise in einem klimatisierten Gehäuse untergebracht werden. Das erfindungsgemäße Verfahren und die Vorrichtung wären damit weitgehend autark z. B. in einem nicht klimatisierten Laborraum einsetzbar.

Die Erfindung betrifft weiterhin eine Vorrichtung, welche für das oben beschriebene Verfahren geeignet ist.

Diese Vorrichtung umfasst mindestens eine Kamera mit einem Infrarotfilter, Infrarotbeleuchtung, Verschiebetische in X-/Y-Ebene für die Kamera und Infrarotbeleuchtung, Aufbewahrungsgefäße für Blattscheiben sowie elektronische Auswerte- und Steuerungseinheiten.

Vorteilhafte Weiterbildungen sind in den Unteransprüchen angegeben.

Die Figuren zeigen beispielhaft Ausführungsformen des erfindungsgemäßer. Verfahrens und der Vorrichtung sowie Ergebnisse von Wachstumsmessungen

Fig. 1: Schematischer Aufbau mit Aufnahmesystem. X, Y, und X2 = Verschiebetische; Der X-Verschiebetisch ist am Aufbau montiert. Pfeile = Bewegungsrichtungen der Verschiebetische; L = Infrarot-Lampen; C = Kamera.

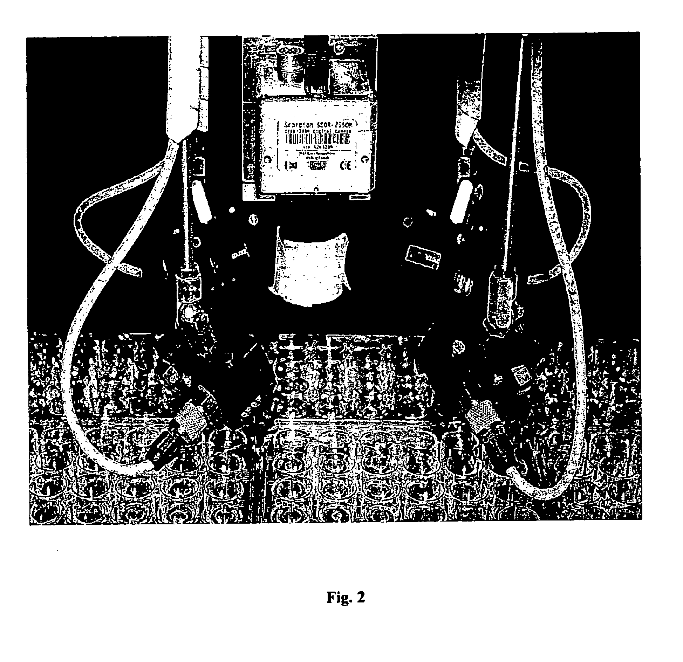

Fig. 2: Kamera, die von vier LED-Arrays umgeben ist, angeordnet über einer Mikrotiterplatte mit darin befindlichen Blattscheiben

Fig. 3: Übersichtsbild aus 395 Einzelbildern, aufgenommen bei Infrarotbeleuchtung

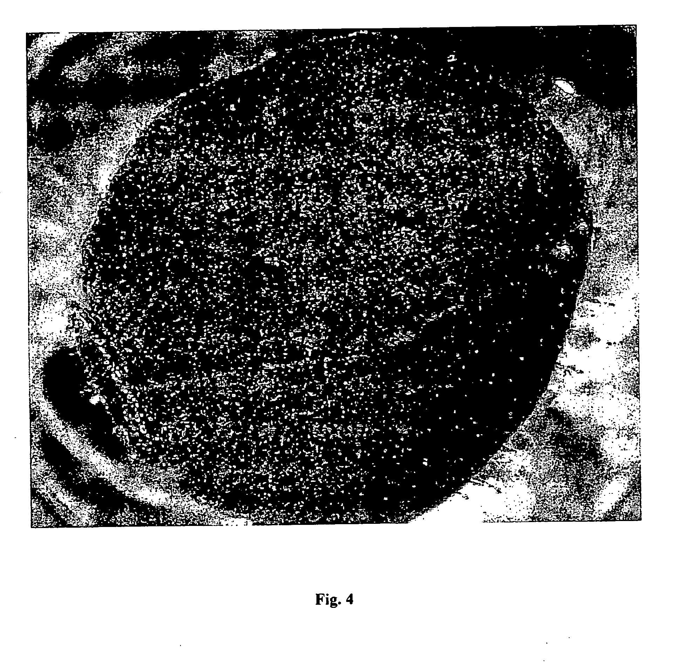

Fig. 4: Blattscheibe aus *Nicotiana tabacum,* auf Lösung schwimmend. Die Oberfläche ist leicht gekrümmt.

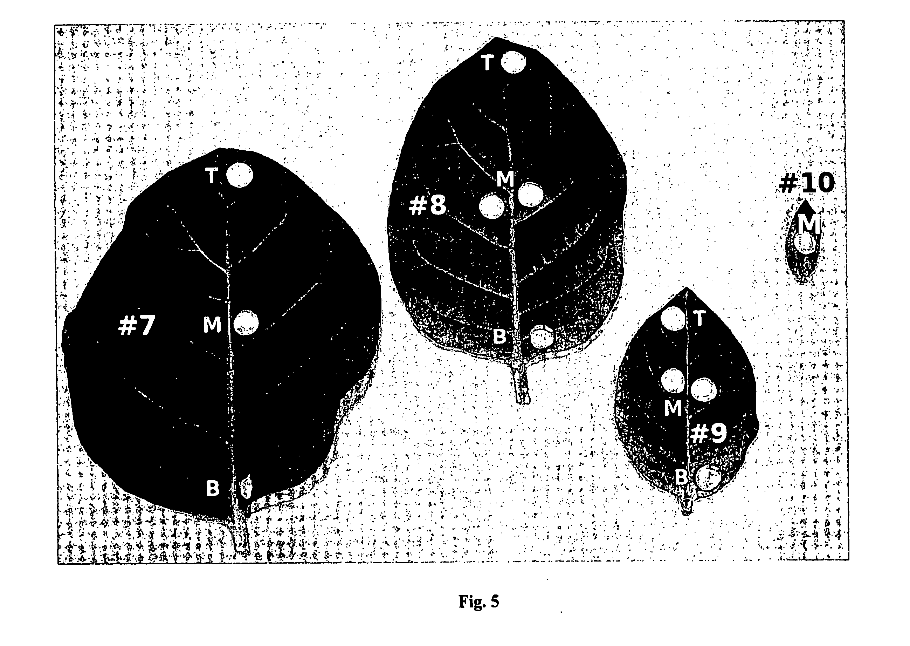

Fig. 5: Blätter mit Blattnummern (gezählt ab der Basis der Pflanze, einschließlich Keimblättern) und Ausstechposition entlang der Mittelrippe (B: Basis; M: Mitte; T: Spitze)

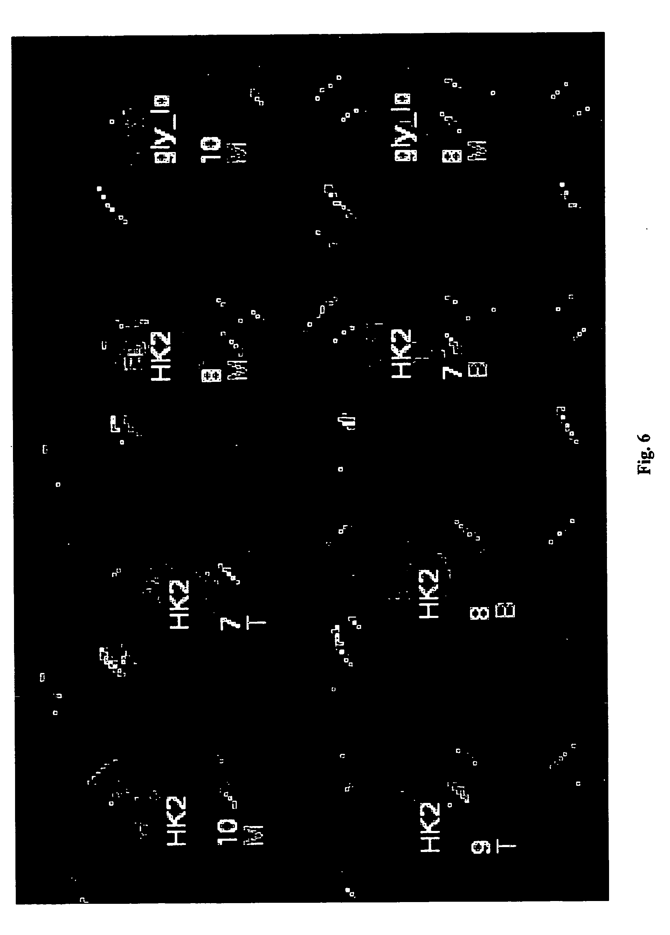

Fig. 6: Ausschnitt eines Übersichtsbildes, das aus mehreren Einzelbildern zusammengesetzt wurde und überlagerten Informationen zu den einzelnen Blattscheiben (Pflanzen-Identifikationsnummer, Behandlung, Blattnummer, Ausstech-Position).

Fig. 7: Flächenmessungen von Blattscheiben konstanter Größe bei verschiedenen Flüssigkeitsständen. x: Flüssigkeitsstand (mm), y: relative Fläche (bezüglich der Fläche bei Wasserstand 0 mm). Der Wasserstand variierte zwischen 0 mm (Boden der Mulde der Mikrotiterplatte) und 10 mm. Durchschnittliche Werte für $A_p$ (offene Quadrate) und $A_{3D}$ (geschlossene Krise) $\pm$ Standardfehler; $n = 24$.

Fig.8: Mikrotiterplatte mit Blattscheiben. Linke Hälfte: Behandlung mit Nährlösung. Rechte Hälfte: Behandlung mit Herbizid Glyphosat (Bilder 72 h nach Beginn des Experiments aufgenommen.).

Fig. 9: Binärmaske $\mathbf{M_t}$, erzeugt durch Schwellwertsegmentierung des Graustufenbildes (weiß: Vordergrund, schwarz: Hintergrund; grau: Blattscheibe, erkannt durch Berechnung von $\frac{\partial A_p}{\partial r}$ . Die endgültige Seg-

mentierungsmaske $\mathbf{M_s}$ erhält diejenigen Pixel aus $\mathbf{M_t}$ die sich in einem Umkreis von $r$ um den Schwerpunkt einer erkannten Blattscheibe befinden und die in $\mathbf{M_t}$ den Wert 1 hatten.

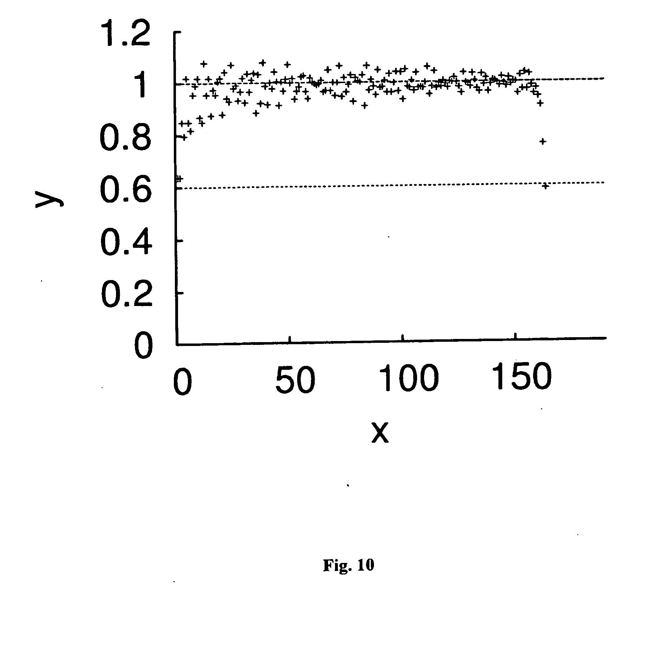

Fig. 10: Flächenzuwachs mit zunehmendem Abstand vom Schwerpunkt. $\mathbf{x}$: $\dfrac{\partial A_p}{\partial r}$ (Pixel), y: $r$(Pixel). Kreuzchen: gemessener Zuwachs; gestrichelte Linie: theoretischer Zuwachs eines geschlossenen Kreises mit zunehmendem $r$, $2\pi r$.

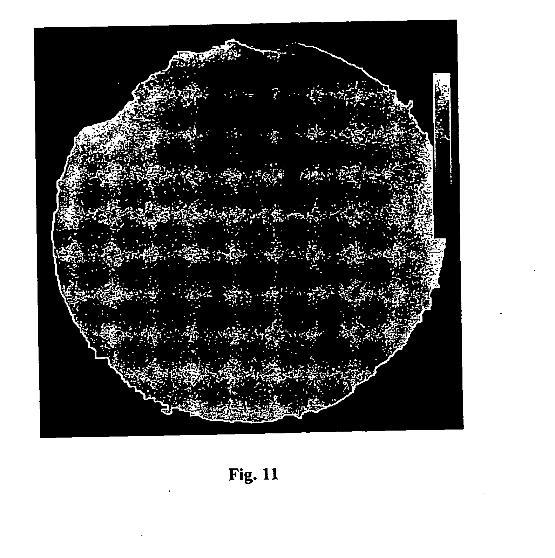

Fig. 11: Nachbearbeitetes Disparitätsbild, bei dem der Hintergrund (Nicht-Pflanzenteile) schwarz dargestellt ist. Skala: Disparitätsbereich [610:620] Pixel.

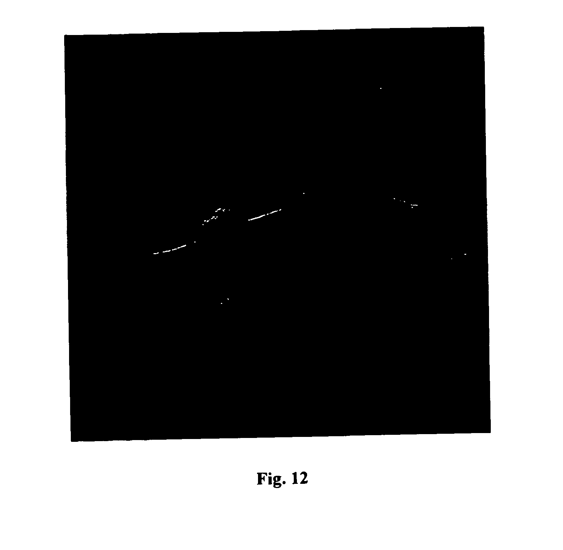

Fig. 12: 3D-Ansicht einer rekonstruierten Blattscheibe.

Fig. 13: Verteilungsdiagramm des erfindungsgemäßen Verfahrens. Ein Gigabit-Netzwerk verbindet MASTER (mit Bildaufnahme, Datenbanksystem und Workflow-Engine), CLIENT-Computer, Dateiserver, Bakkup-System und Linux-Cluster. Rechteckige Boxen: Screening-Programme.

Fig.14: Aktivitätsdiagramm der wesentlichen Workflow-Schritte in UML (Unified Modeling Language) Notation. Workflow-Regeln werden in der Datenbanktabelle rules gespeichert. Es gibt zwei unterschiedliche Arten von Workflow-Regeln: (1) zustandsbasierte Regeln, die für eine bestimmte Kombination von Schritt und Zustand des Jobs ausgelöst werden, und (2) Code-basierte Regeln, bei denen Programmcode ausgeführt wird, um zu bestimmen, ob ein neuer Job erzeugt werden muss (Beispiel: Erzeugung von Übersichtsbildern nach Ende eines Bildaufnahme-Durchlaufs).

Fig.15: Skalierbarkeit, d. h. Verhalten eines Programms bezüglich des Ressourcenbedarfs bei wachsenden Eingabemengen, hier insbesondere der Zeitbedarf. x: Anzahl verwendeter CPUs; y: % Ausführungsgeschwindigkeit (normiert auf sequentielle Bearbeitung). Offene Quadrate: Leere Jobs; offene Kreise: CPU_BOUND Jobs; geschlossene Quadrate: IO_BOUND Jobs; geschlossene Kreise: MIXED Jobs. Fehlerbalken zeigen Standardfehler (n = 3).

Im Folgenden sollen Ausführungsbeispiele angegeben werden, welche das erfindungsgemäße Verfahren und die erfindungsgemäße Vorrichtung näher erläutern.

• **Ausführungsbeispiel**

• **Genauigkeit des erfindungsgemäßen Verfahrens**

Als Test der Genauigkeit der Bestimmung der projizierten Blattfläche $A_p$ (Blattfläche projiziert) wurden 24 Blattscheiben von Nicotiana tabacum ausgestochen und sofort mit einem Flachbrettscanner (Epson Perfection 2480 Photo, Epson, Suwa, Japan) bei einer Auflösung von 400 dpi vor einem weißen Hintergrund eingescannt. Das vom Scanner erzeugte RGB-Bild wurde in den HSV (Hue, Saturation, Brightness Value)-Farbraum transformiert. Anschließend wurde das Blattmaterial durch Anwendung von Schwellwerten (Minimum/Maximum) auf die Kanäle H, S und V in Blatt- und Hintergrund segmentiert. Dieses Verfahren ist optimal zur Identifikation von Blattgrün, da die gesamte Farbinformation zur Verfügung steht (Russ, 2002; Walter et al., 2007; Biskup et al., 2007). Der Variationskoeffizient (CV) des auf diese Weise bestimmten $A_p$ betrug 3.8 %, d. h. die Fläche von Blattscheiben, die mit einem Korkbohrer ausgestochen wurden variierte um 3.8 %. Dagegen betrug der CV, der mit dem erfindungsgemäßen Verfahren gemessenen Fläche $A_p$ in 24 Blattscheiben 3.2 % und CV $A_{3D}$ (Flächeninhalt der mittels erfindungsgemäßem dreidimensionalem Vermessungsverfahren rekonstruierten Blattfläche) 3.8 %. Im Allgemeinen sollte CV($A_{3D}$) größere Werte annehmen als CV($A_p$), da ein Korkbohrer Blattscheiben mit einem nahezu perfekten Kreisrand ausschneidet, die Oberfläche aber aufgewölbt oder gewellt sein kann. Die Genauigkeitsbestimmung ergab, dass das erfindungsgemäße Verfahren trotz fehlender Farbinformation ein ähnlich gutes, wenn nicht besseres Segmentierungsergebnis liefert wie herkömmliche Bildverarbeitungsverfahren.

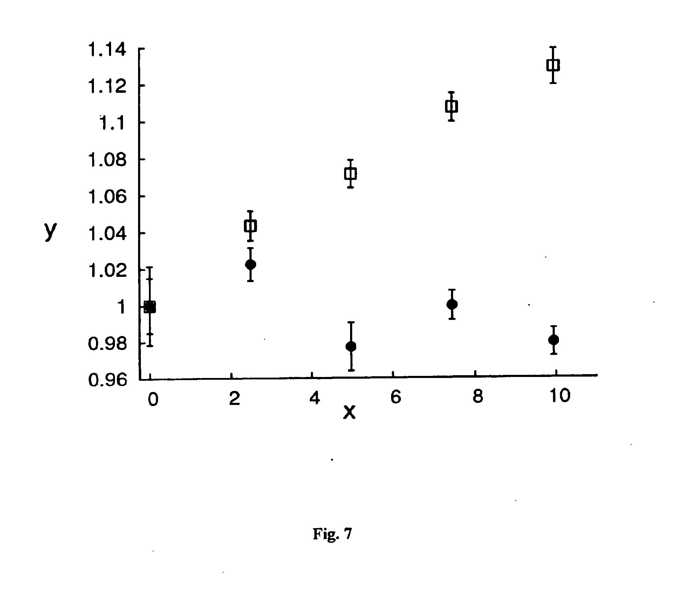

Um die Auswirkung der Entfernung zwischen Kamera und Objekt auf die Genauigkeit der Flächenbestimmung zu untersuchen wurden Bilder von schwimmenden Blattscheiben bei unterschiedlichen Flüssigkeitsständen aufgenommen. (Fig. 7). Die projizierte Blattfläche Ap war deutlich entfernungsabhängig; sie erhöhte sich um 14 % mit Verringerung des Kameraabstands um 10 mm. Im Gegensatz dazu blieb $A_{3D}$ nahezu konstant, mit einer maximalen Variation von 2 %. Dies zeigt deutlich die Notwendigkeit des hier vorgestellten erfindungsgemäßen 3D-Rekonstruktionsverfahrens zur genauen Wachstumsmessung, wenn die Messzeiträume so lang sind, das Verdunstung den Flüssigkeitsspiegel merklich senkt.

Wachstumsanalysen

Insgesamt 458 Blattscheiben von Nicotiana tabacum wurden für eine Fallstudie zu Wachstumsmessungen verwendet. Bei schnellstmöglicher Bildaufnahme wurde jede Blattscheibe einmal in 1.5 h aufgenommen (ein Bildpaar pro Blattscheibe). Dies entspricht einer durchschnittlichen Aufnahmedauer von 11.8 s pro Blattscheibe einschließlich Kamerapositionierung. Das Experiment wurde nach 72 h beendet. Insgesamt wurden ca. 22000 Bilder aufgenommen.

**Bildverarbeitungssystem**

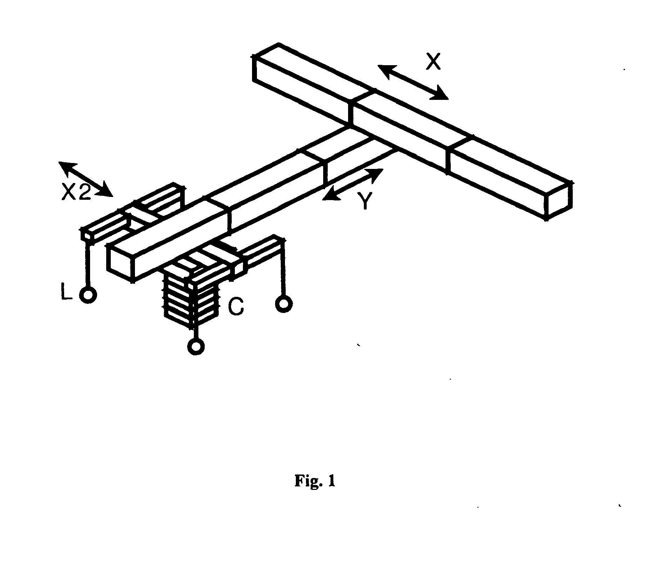

Der Hardwareaufbau (Fig. 1 u. 2) basiert auf dem Entwurf des 2D-Screening-Systems GROWSCREEN (Walter et al., 2007). Das erfindungsgemäße System erfasst eine rechteckige Messfläche von 58 cm x 58 cm. Bilder werden mittels einer Point Grey Scorpion SCOR-20SOM Kamera (Point Grey Research, Vancouver, BC, Canada) aufgenommen (2 Megapixel; max. Auflösung $1600 \times 1200$ Pixel) und mittels eines FireWire 400 Anschlusses an den Steuerrechner übertragen (IEEE 1394a; maximale Übertragungsrate: 400 MBits). Bilder werden durch ein C-Mount-Objektiv (15 mm; Rodenstock, München, Deutschland) mit einem Infrarot (IR)-Filter (Model 27 093; Schneider-Kreuznach, Bad-Kreuznach, Germany; Durchlässigkeit bei Wellenlängen über 800 nm) aufgenommen. Die Kamera ist senkrecht nach unten gerichtet. Zur Beleuchtung für die Bildaufnahme dienen vier IR-LED-Arrays, jede mit 18 LEDs ($\lambda_{max}$ = 800 nm; Conrad Electronic, Hirschau, Germany). IR-Beleuchtung ist physiologisch nicht aktiv und besitzt den zusätzlichen Vorteil, das Pflanzenmaterial kontrastreicher erscheinen zu lassen.

Die LED-Beleuchtung bleibt während des gesamten Experiments eingeschaltet, um ein temperaturabhängiges Driften der Beleuchtungsintensität zu verhindern. Die verwendeten LED-Arrays näherten sich erst nach über 20 min. bis auf 1 % einer stabilen Intensität. Pro Aufnahmeposition werden, um das Bildrauschen zu reduzieren, 5 Bilder aufgenommen und deren Mittelwert gebildet. Die Bilder werden bei einer Auflösung von $1280 \times 960$ Pixeln aufgenommen und im TIFF-Format, mit verlustfreier PackBits-Kompression, gespeichert.

Die Kamera und die IR-Beleuchtungseinheit werden mittels zweier hoch präziser Verschiebetische ('X' and 'Y'; Pico-Maxi, Type FMD-LPT80.550.1205-SM, Laser 2000 GmbH, München, Germany; Mikroschrittmotoren: MDrive 23 Plus; Intelligent Motion Systems, Marlborough, USA) in einer horizontalen Ebene bewegt. Ein dritter Verschiebetisch ('$X_2$') dient dazu, die Kamera bei der Aufnahme von Stereo-Bildpaaren oder -serien in X-Richtung zu verschieben, während die IR-Beleuch-tungseinheit ihre Position nicht ändert. Dies ist notwendig, da eine konstante Beleuchtung eine Voraussetzung für Stereoaufnahmen ist. Das gesamte Aufnahme- und Positionierungssystem ist an einem stabilen Gerüst aus X-95-Profilelementen montiert (Linos Photonics, Göttingen, Germany).

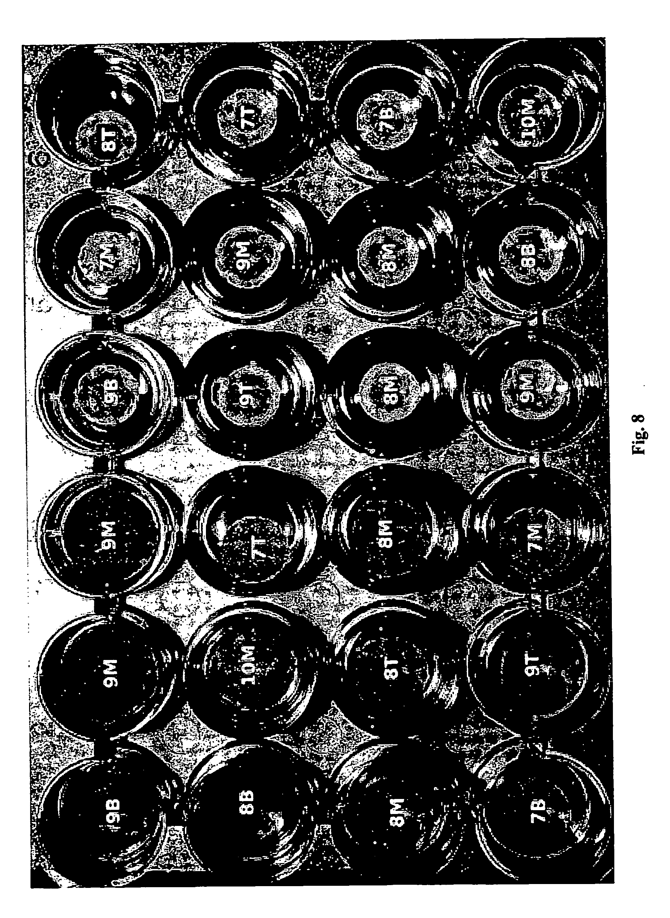

Untersuchte Blattscheiben werden in Mikrotiterplatten mit 24 Mulden aufbewahrt (Fig. 8; Nunc, Roskilde Dänmark). Die Mulden sind gleichmäßig angeordnet und haben jeweils ein Volumen von 2.5 ml. Für die Dauer eines Experiments werden die Deckel der Platten entfernt, um uneingeschränkten Gasaustausch zu ermöglichen und Beschlagen zu verhindern. Die Versuchsobjekte lagern auf einer Hebebühne (Swiss BOY 110, Rudolf Grauer AG, Degersheim, Schweiz), mittels der ein geeigneter Abstand für die Bildaufnahme eingestellt werden kann. Mittels einer Wasserwaage wird sichergestellt, dass sowohl das Positionierungssystem als auch die Versuchsobjekte waagerecht orientiert sind. Die Unterlage ist zur Kontrasterhöhung (und damit zur Erleichterung der Segmentierung) mit einer schwarzen Kunststofffolie abgedeckt.

**Computersystem**

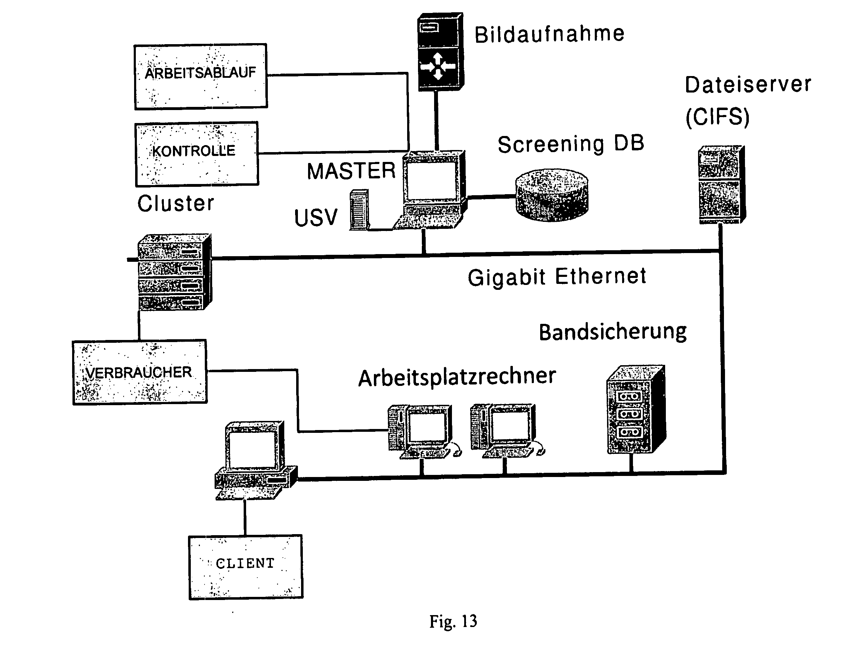

Fig. 13 zeigt schematisch die Hardwarekomponenten und die auf den einzelnen Rechnersystemen laufenden Softwarekomponenten des erfindungsgemäßen Verfahrens. Die Bildaufnahme wird auf einem Personal Computer (PC) durchgeführt MASTER bezeichnet; Intel® Pentium® 4 DualCore, 2 GB DDR400 RAM (Intel, Santa Clara, USA), SuSE Linux 10.2; SuSE, 2006). Auf diesem PC läuft eine Mehrbenutzer-Datenbank (s. u.). Mehrere weitere PCs (Cluster-Knoten; 1 GB DDR 400 RAM, SuSE Linux 10.2 (Novell, Provo, USA)) stehen dem Screening-System zur automatischen Bildauswertung zur Verfügung. Alle verwendeten Rechner sind per Gigabit-Netzwerk verbunden, um das hohe Datenaufkommen zu bewältigen.

**Datenverwaltung**

Anfallende Daten werden in einer MySQL-Datenbank (MySQL AB, Uppsala, Sweden) und auf einem Dateiserver verwaltet. Stammdaten und dynamische Daten des Screening-Systems werden in der Datenbank gespeichert und sind über das Netzwerk abrufbar. Die Datenbank bildet die Hauptschnittstelle der Kommunikation zwischen der Kemanwendung und des Cluster-Knoten.

Bild- und andere Massendaten werden auf dem Dateiserver abgelegt. Dieser Server ist für MASTER und für alle Knoten über das Common internet file system (CIFS) zugänglich. Dateien auf diesem Server werden anhand ihres Pfadnamens referenziert. Die Datenbank speichert zu den Massendaten Meta-Informationen (Dateityp, Erzeugungsdatum, Herkunft).

**Parallelisierung und Workflow-Konzept**

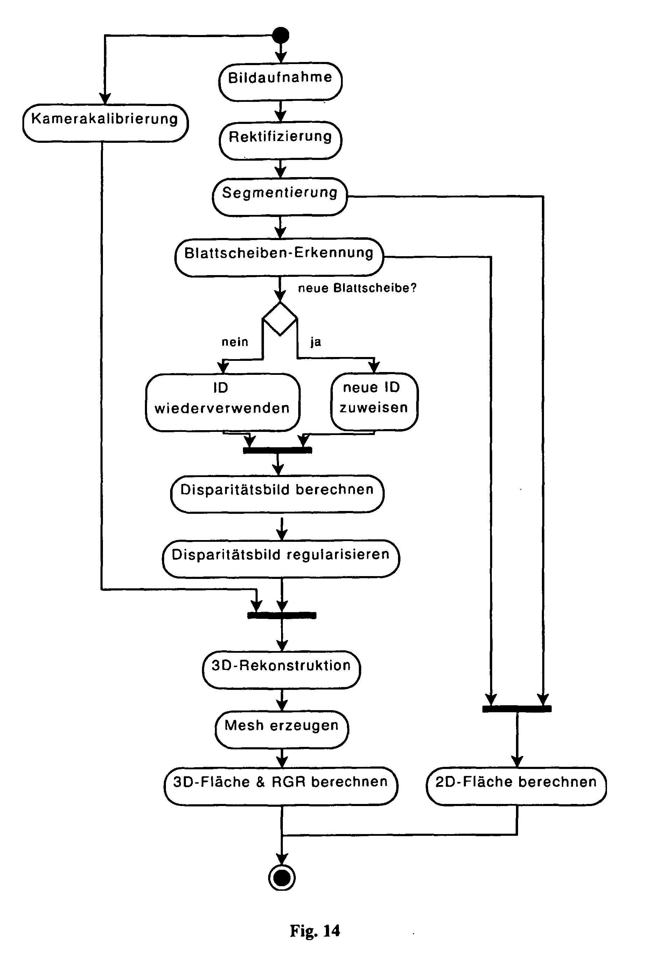

Die Verarbeitung der aufgenommenen Bilder wurde gemäß dem Workflow-Paradigma (Ellis, 1999) implementiert. Die Gesamtaufgabe wird dabei in eine Reihe getrennter Workflow-Schritte aufgeteilt. Auf diese Weise 1.) können Verarbeitungsschritte in anderen Workflows wiederverwendet werden, 2.) ist die Auswertung leicht parallelisierbar und 3.) können einzelne Schritte z. B. nach Änderung von Konfigurationsparametern leicht erneut ausgeführt werden. Fig. 14 zeigt die einzelnen Schritte der Berechnung der 3D-Fläche von Blattscheiben.

**1.) Kalibrierung des Aufnahmesystems**

**a) Kamerakalibrierung**

Vor Ausführung eines Experiments wurde die Kamera mittels eines etablierten Verfahrens kalibriert (Zhang, 1999; Zhang, 2000): Mindestens 30 Bilder eines Schachbrettmusters wurden aus verschiedenen Orientierungen aufgenommen. Die intrinsischen Parameter der Kamera (Brennweite, Hauptpunkt, radiale und tangentiale Verzerrung) wurden mit der OpenCV-Implementierung der Camera Calibration Toolbox von J. Y. Bouguet (Intel, Santa Clara, CA, USA) geschätzt.

**b) Stereokalibrierung**

Die Parameter des Stereo-Systems (Rotation und Translation d. rechten Kamerasystems bezüglich des linken) wurde folgendermaßen bestimmt: Die Stereo-Grundlinie ist wegen der verwendeten hochpräzisen Verschiebetische bekannt. Da allerdings der CCD-Sensor der Kamera aufgrund der Montage gegenüber der Verschieberichtung leicht rotiert sein kann, kann eine Korrektur erforderlich sein. Falls eine Rotation vorliegt, so hängt diese linear von der Verschiebeentfernung ab. Sie kann die Qualität der Stereo-Korrespondenz-suche beeinträchtigen, da der verwendete Algorithmus davon ausgeht, dass die Kameraverschiebung entlang den Zeilen des Kamerasensors (in X-Richtung) stattfindet und daher eine Korrespondenzsuche ebenfalls nur in einer Zeile zu erwarten ist. Daher werden zur Korrektur mindestens 40 Korrespondenzen mit der Panorama-Stitching-Software Hugin bestimmt und anschließend die Rotation geschätzt. Dann wird das rechte Bild so rotiert, dass Bildzeilen und Verschieberichtung wieder übereinstimmen. Diese Prozedur muss nach Montage der Kamera nur einmal durchgeführt werden. Alternativ kann die Stereo-Kalibrierung zum Beispiel auch mit der zuvor erwähnten Camera Calibration Toolbox von J. Y. Bouguet (Intel, Santa Clara, CA, USA) durchgeführt werden.

**2.) Bildaufnahme**

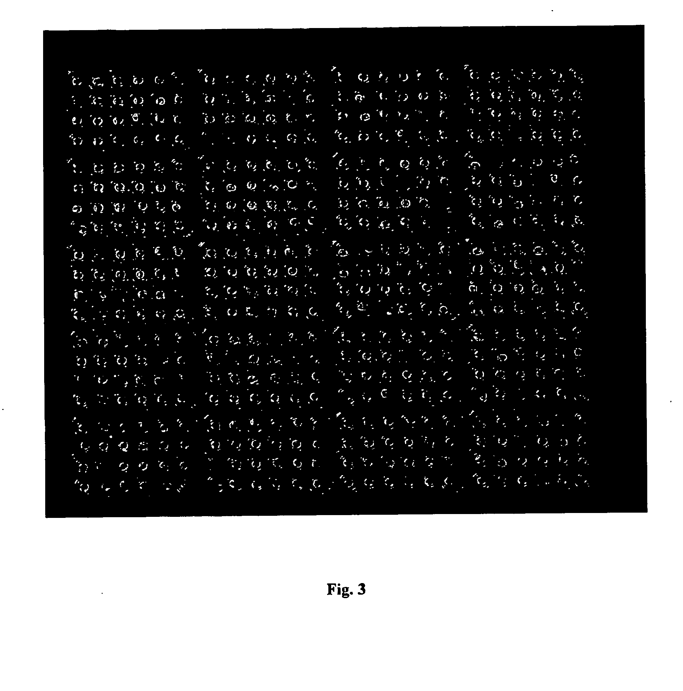

Vordefinierte Bildaufnahmepositionen (Fig. 3) werden in optimaler Reihenfolge (gemäß Dijkstra's Algorithmus; Dijkstra, 1959) aufgesucht, um die Positionierungsdauer zu minimieren. Bei jeder Aufnahmeposition werden zwei Bilder mit einer Basis (Abstand zwischen Kamerazentren) b = 20 mm aufgenommen. Es ist wünschenswert, b möglichst groß zu wählen, da die dadurch verursachten größeren Disparitäten eine bessere Tiefenauflösung erlauben. Andererseits wird $b$ durch die Größe des Sichtfelds und der Blattscheibe begrenzt. Bei der gewählten Basis b = 20 mm war sichergestellt, dass die Blattscheiben im linken und im rechten Bild für die Dauer eines Experiments sichtbar waren.

**3.) Segmentierung / Erkennung von Blattscheiben**

Die biologische Notwendigkeit, bei der Bildaufnahme Infrarot- statt Weißlicht-Beleuchtung zu verwenden, erschwert die Segmentierung: Farbbilder können einfach und genau segmentiert werden (Russ, 2002; Walter et al., 2007). Dagegen können wegen des begrenzten Spektrums unter IR-Beleuchtung nur Grauwertbilder aufgenommen werden. Die Verwendung eines dunklen Hintergrunds ist von Vorteil, aber die Muldenwände der Mikrotiterplatten lassen sich nicht allein anhand des Grauwerts von den Blattscheiben separieren. Deshalb wurde die folgende Segmentierungsprozedur verwendet:

- Intensitätsschwankungen (wg. inhomogener Beleuchtung) in den aufgenommenen Bilder $I_{acq}$ werden mittels Referenz-Hintergrundbildern korrigiert (Jähne, 2002).

- **Schwellwertsegmentierung:** Binärmasken **(M$_t$)** der aufgenommenen Bilder werden durch Anwendung eines Minimal- und eines Maximalschwellwerts erzeugt. Diese Werte werden, je nach Beleuchtungsintensität und Helligkeit der Blattscheibe, durch schrittweises Variieren und Vergleichen der erzeugten Maske mit den visuell erkennbaren Begrenzungen der Blattscheibe, bestimmt.
- **Morphologische Erosion:** Die Ränder der Masken werden morphologisch erodiert (Jähne, 2002). Dadurch werden Unregelmäßigkeiten der Objektkonturen entfernt. Dann wird der Schwerpunkt **c**$_i$ jeder potentiellen Blattscheibe aus den verbleibenden Pixeln berechnet.

- **Randbereinigung:** Die Zunahme der Pixelanzahl (Pixelfläche) mit zunehmendem Abstand $r$ von c$_i$, $\dfrac{\partial A_p}{\partial r}$, wird verwendet, um den Rand einer Blattscheibe zu erkennen.

Der Radius $r_{\max}$, bei dem $\dfrac{\partial A_p}{\partial r}$ unter 0.6 mal den theoretischen Zuwachs einer Scheibe, $2\pi r$ fällt, wird als

Randkriterium für die Segmentierung verwendet (Fig. 9 u. 10). Auf diese Weise entsteht die endgültige Segmentierungsmaske **M$_s$**. Potentielle Blattscheiben aus beiden Bildern eines Bildpaares werden anhand der tatsächlichen und erwarteten Disparität in Übereinstimmung gebracht.

Wenn zuvor an der gegebenen Position keine Blattscheibe detektiert wurde, wird die neue Blattscheibe mit einer eindeutigen Kennung, der Pflanzenidentifikationsnummer, in die Datenbank eingetragen.

Die projizierte Blattfläche $A_p$ wird als Summe der Nicht-null-Pixel in **M$_s$** des ersten Bildes eines Bildpaares bei einer gegebenen Position berechnet.

Zur Reduktion des Datenvolumens werden für weitere Bearbeitungsschritte nur die Bildausschnitte verwendet, in denen sich Blattscheiben befinden.

### 4.) Stereo-Korrespondenzsuche und 3D-Rekonstruktion

Bildpaare von Blattscheiben aus den vorigen Verarbeitungsschritten werden verwendet, um mittels 2-Kamera-Stereo Tiefenkarten zu berechnen.

- Bilder werden rektifiziert, d. h. begradigt. Dabei wird die Orientierung des Bildes so begradigt oder korrigiert, dass Verschiebungen (Disparitäten) nur in x-Richtung auftreten. Die Scan-Zeilen des Kamerasensors stimmen dadurch mit der Bewegungsrichtung der Kamera übereinstimmen (siehe Stereokalibrierung).

- Ein korrelationsbasierter Stereoalgorithmus (Faugeras et al., 1993; Biskup et al., 2007) wird auf die rektifizierten Bildpaare angewendet. Der Algorithmus versucht, für jeden Bildpunkt in einem Bild die Verschiebung des korrespondierenden Punkts im anderen Bild zu bestimmen (= Korrespondenzsuche). Eine Korrelationsfunktion $c_2$ z. B. aus Faugeras et al., (1993) wird verwendet, um rechteckige Bildbereiche zu vergleichen. Aufgrund der verwendeten Stereogeometrie und der zuvor durchgeführten Rektifikation können nur horizontale Verschiebungen auftreten. Folglich stellt die Korrespondenzsuche nur ein 1D-Problem anstelle eines 2D-Problems dar (Hartley and Zisserman, 2004; Trucco and Verri, 1998). Das Ergebnis der Korrespondenzsuche ist ein Disparitätsbild **D**.

- Nachbearbeitung: Ausreißer in **D** werden mittels eines Medianfilters (Radius: 25 Pixel) entfernt (Klette und Zamperoni, 1995). Ausreißer sind implizit solche Pixel, die sehr klein oder sehr groß sind im Vergleich der Umgebung. Alle Pixel in der Umgebung werden nach ihrem Wert sortiert und der Wert in der Mitte der Liste genommen. So wird ein Rang erzeugt.

Da am Ende der Verarbeitungsschritte Flächeninhalte berechnet werden sollen, müssen eventuell vorhandene Löcher in den rekonstruierten Blattscheiben geschlossen werden. Dies geschieht durch Interpolation von Punkten, für die keine Disparitätsschätzung möglich war, durch normalisierte Faltung (Knutson and Westin, 1993). Die Nachbearbeitung liefert ein geglättetes Disparitätsbild **D$_{geg}$**.

- Anhand der intrinsischen und extrinsischen Parameter des Stereosystems wird die 3D-Position aller Punkte in **D$_{geg}$** trianguliert. Auf diese Weise entsteht das Koordinatengitter **W**, in dem die euklidischen Koordinaten $X,\ Y$ und $Z$ abgelegt werden.

**5.) Glättung des Oberflächenmodells**

Die Tiefe Z der rekonstruierten 3D-Punktwolke wird mit einem scheibenförmigen Mittelwertfilter (Jähne, 2002) (Radius: 15 Pixel) geglättet, um kleinskalige Unebenheiten der Oberfläche zu entfernen.

- Das 3D-Modell wird unterabgetastet (an jedem 7. Punkt in *X*- und *Y*-Richtung) und die 3D-Fläche $A_{3D}$ einer Blattscheibe wird anhand der bekannten Nachbarschaftsbeziehungen der einzelnen Punkte auf der Oberfläche bestimmt:

$$A_{3D} = \sum_{y=1}^{h}\sum_{x=1}^{w} A_{\Delta}\left(W_{x,y}, W_{x-1,y}, W_{x-1,y-1}\right)$$

wobei:

h = Höhe des Bildes
w = Breite des Bildes
$A_{\Delta}$ = Dreiecksfläche
W = Koordinatengitter
$W_{xy}$ = Gitterposition
mit der durch drei 3-Vektoren definierten Dreiecksfläche $A_{\Delta}$.

**6.) Ermittlung der Wuchsraten**

Unter Annahme exponentieller Wuchsraten der Form $A(t_2) = A(t_1)e^{RGR(t2 - t1)}$ sind relative Wuchsraten (relative growth rates; RGR) von Blattgewebe definiert durch $RGR[d^{-1}] = \dfrac{100}{t_2 - t_1}\ln\left(\dfrac{A(t_2)}{A(t_1)}\right)$ mit den projizierten oder 3D-Blattflächen $A(t_2)$ und $A(t_1)$ zu zwei aufeinander folgenden Zeitpunkten $t_2$ bzw. $t_1$ und $d^{-1}$ = pro Tag (e.g. Walter and Schurr, 1999).

**Software-Architektur**

Das erfindungsgemäße Verfahren verwendet hauptsächlich Open Source Software. Die Client-Software (Programm CLIENT) ist in C++/Qt (Trolltech, Oslo, Norwegen) implementiert. Die Hauptaufgabe des CLIENT-Programms besteht darin, 1.) neue Messkampagnen zu parametrieren (Messintervalle, etc.); 2.) Kameras und Verschiebetische einzustellen; 3.) Ein Überblicksbild des gesamten Arbeitsbereichs zu erzeugen, mittels dem dann aufzunehmende Blattscheiben angewählt werden können; 4.) Überwachung des laufenden Systems (Status der Auswertung, Systemlast, etc). Das Programm CLIENT läuft auf Linux- und Win32-Betriebssystemen.

**Leistungseigenschaften**

Um die Leistungseigenschaften des verteilten Systems zu messen, wurde die durchschnittliche Ausführungszeit unterschiedlicher, künstlicher Auswertungsjobs analysiert (Tabelle 1). Die Messungen wurden mit unterschiedlichen Anzahlen von Cluster-Knoten wiederholt, um die Skalierbarkeit zu bestimmen. Das verteilte System für den Performancetest bestand aus einem 64-bit 2.6 GHz DualCore Computer mit MySQL-Datenbank und Aufnahmesoftware, und fünf 32-bit Intel® Pentium® 4 DualCore Computern für die Auswertung (Cluster-Knoten). In der Maximalkonfiguration wurden auf jedem Cluster-Knoten parallel zwei Consumer-Prozesse ausgeführt.

**Tabelle 1**. Künstliche Jobs zur Bestimmung des Zeitverhaltens bei zunehmder Belastung (Skalierungseigenschaften) des erfindungsgemäßen Verfahrens

| Job-Typ | Beschreibung | Durchschnittliche Dauer im sequentiellen Modus (s) |
|---|---|---|
| EMPTY | Reiner Overhead; Keine Berechnung | 0.02 |

(fortgesetzt)

**Tabelle 1**. Künstliche Jobs zur Bestimmung des Zeitverhaltens bei zunehmder Belastung (Skalierungseigenschaften) des erfindungsgemäßen Verfahrens

| Job-Typ | Beschreibung | Durchschnittliche Dauer im sequentiellen Modus (s) |
|---|---|---|
| CPUBOUND | Nur Berechnung | 46 |
| MIXED | Berechnung und Erzeugung einer 10 MB großen Datei | 14 |
| IOBOUND | Erzeugung einer 10 MB großen Datei (Größe eines typischen Job-Outputs) | 3 |

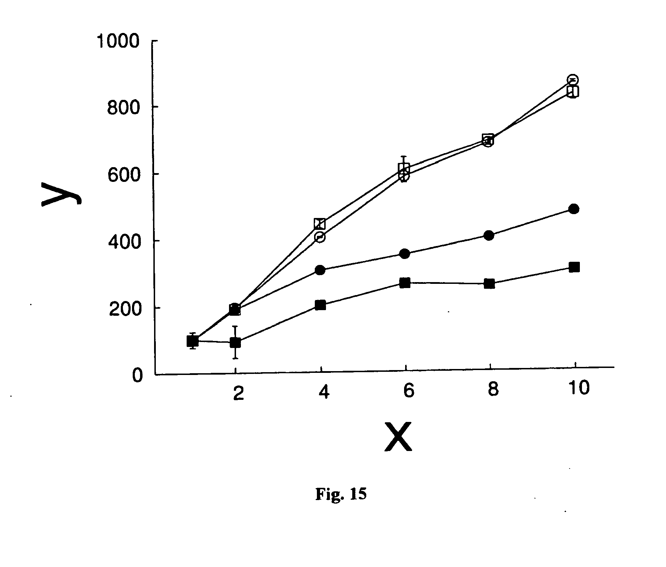

Fig. 15 stellt die Skalierbarkeit bei der Ausführung unterschiedlicher künstlicher Jobs dar. EMPTY und CPU_BOUND-Jobs haben ähnliche Charakteristiken. Sie skalieren fast linear über einen Bereich von 1-10 verwendeten CPUs. IO_BOUND-Jobs skalieren schlechter. Bei 10 verwendeten CPUs wird lediglich eine Durchsatzsteigerung um 200% gegenüber einer verwendeten CPU erreicht. Typische Auswertungsjobs verhalten sich eher wie CPU_BOUND-Jobs, weil nur der Datenverkehr von und zum Dateiserver und nicht der lokale Datenverkehr die Ausführungsgeschwindigkeit anderer Knoten beeinträchtigt.

**Serverprogramme**

Die Serverprogramme sind in der Programmiersprache Python (Van Rossum, 2006) implementiert. Performancekritische Teile sind in C++ implementiert. Python-Anbindungen für C und C++-Bibliotheken wurden mit dem SWIG Wrapper Generator erzeugt.

Das Programm WORKFLOW überprüft periodisch die Datenbanktabelle *job* nach Jobs, die einen Timeout erreicht haben oder bei denen die Ausführung einen Fehler zurücklieferte (Zustand ERROR), und lässt diese erneut ausführen. Darüber hinaus werden Workflow-Regeln angewandt, wodurch gegebenenfalls neue Jobs erzeugt werden.

Das Programm CONSUMER läuft auf jedem Cluster-Knoten und führt dort Jobs im Zustand NEW aus. Auf Mehrkern-Maschinen wird CONSUMER einmal pro vorhandenem Prozessorkem gestartet.

Das Programm WATCHDOG prüft regelmäßig Datenbank und Dateisystem auf Probleme (Funktionsausfall, mangelnder Speicherplatz) und informiert gegebenenfalls den Systemadminstrator per e-Mail.

**Literatur**

Biskup B., Scharr H., Schurr U. & Rascher U. (2007) A stereo imaging system for measuring structural parameters of plant canopies. Plant, Cell and Environ. 30, 1299 - 1308.

Dijkstra E.W. (1959) A note on two problems in connexion with graphs. Numer. Math. 1: 269-271

Ellis C.A. (1999) Workflow technology. In: Beaudouin-Lafon, M. (Ed.), Computer Supported Co-operative Work Trends in Software 7, 29-54. John Wiley & Sons Ltd., Chichester, UK

Faugeras O., Hotz B., Mathieu H., Viéville T., Zhang Z., Fua P., Theron E., Moll L., Berry G., Vuillemin J., Bertin P., Proy C. (1993) Real time correlation-based stereo: algorithm implementations and applications. Technical Report 2013, INRIA Sophia Antipolis

Granier C., Aguirrezabal L., Chenu K., Cookson S. J., Dauzat M., Hamard P., Thioux J., Rolland G., Bouchier-Combaud S., Lebaudy A., Muller B., Simonneau T. & Tardieu F. (2006) PHENOPSIS, an automated platform for reproducible phenotyping of plant responses to soil water deficit in Arabidopsis thaliana permitted the identification of an accession with low sensitivity to soil water deficit. New Phytol. 169, 623-635.

Jähne B. (2002) Digital Image Processing (3rd ed.): Concepts, algorithms, and scientific applications. Springer-Verlag, London, UK

Jenness JS (2004) Calculating landscape surface area from digital elevation models. Wildlife Society Bulletin 32, 829-839

Kaminuma E., Heida N., Tsumoto Y., Yamamoto N., Goto N., Okamoto N., Konagaya A., Matsui M., and Toyoda T. (2004) Automatic quantification of morphological traits via three-dimensional measurement of Arabidopsis. Plant J. 38, 358-65.

Klette R., Zamperoni P., (1995) Handbuch der Operatoren für die Bildverarbeitung. Braunschweig-Vieweg, 2.Aufl.

Scharr H. (2004). Optimal filters for extended optical flow. In International Workshop on Complex Motion (IWCM) 14-29.

Russ J.C. (2002) The image processing handbook. CRC Press, Inc., Boca Raton, FL

Walter A, Schurr U (1999) The modular character of growth in Nicotiana tabacum plants under steady-state nutrition. J. Exp. Bot. 50: 1169-1177

Walter A. (2000) Räumliche und zeitliche Wachstumsmuster in Wurzeln und Blättern dikotyler Pflanzen. Dissertation, Univ. Heidelberg.

Walter A., Scharr H., Gilmer F., Zierer R., Nagel K. A., Ernst M., Wiese A., Virnich O., Christ M. M., Uhlig B., Jünger S. & Schurr U. (2007) Dynamics of seedling growth acclimation towards altered light conditions can be quantified via GROWSCREEN: a setup and procedure designed for rapid optical phenotyping of different plant species. New Phytol. 174, 447-455.

Zhang Z. (1999) Flexible camera calibration by viewing a plane from unknown orientations. In: Int. J. Comput. Vision 666 - 673.

Zhang Z. (2000) A flexible new technique for camera calibration. IEEE T. Pattern Anal. 22: 1330-1334.

**Patentansprüche**

1. Verfahren zur Vermessung des Wachstums von Blattscheiben von Pflanzen, **gekennzeichnet durch** folgende Schritte:

   a) Kalibrierung eines Aufnahmesystems und Bestimmung von Kalibrierparametern des Aufnahmesystems
   b) Bildaufnahme von mindestens einem Stereobildpaar einer Blattscheibe mit dem kalibrierten Aufnahmesystem
   c) Bearbeitung jedes aufgenommenen Bildes umfassend,

       *i*) Segmentierung der Blattscheiben **durch** Schwellenwertsegmentierung,
       *ii*) Durchführung morphologischer Erosionsschritte auf den segmentierten Bildern,
       *iii*) Durchführung einer Randbereinigung zur Entfernung des Randes des Aufbewahrungsgefäßes und Erkennung des Rands der Blattscheibe auf den morphologisch erodierten Bildern,

   d) Ermittlung des projizierten Blattflächeninhalts $A_p$ der Blattscheibe aus den randbereinigten Bildern
   e) Durchführung einer 3D-Rekonstruktion umfassend: Erstellung eines Disparitätsbilds D mittels eines Stereo-Algorithmus aus den aufgenommenen Bildpaaren, Berechnung eines 3D-Oberflächenmodells anhand der zuvor bestimmten Kalibrierparameter aus dem Disparitätsbild,
   f) Glättung des gewonnenen 3D-Oberflächenmodells,
   g) Ermittlung des 3D Flächeninhalts $A_{3D}$ der Blattscheibe aus-dem geglätteten Oberflächenmodell
   h) Wiederholung der Bildaufnahme gemäß Schritt b) zu unterschiedlichen Zeitpunkten
   i) Erstellung von Zeitreihen der ermittelten Flächeninhalte **durch** Auswertung der Bildaufnahmen, die zu unterschiedlichen Zeitpunkten aufgenommen wurden, gemäß der Schritte c-g)
   j) Ermittlung der Wuchsraten der Blattscheibe aus den Zeitreihen der ermittelten Flächeninhalte.

2. Verfahren nach Anspruch 1,
   **dadurch gekennzeichnet,**

**dass** bei der Kalibrierung des Aufnahmesystems mindestens 30 Bilder eines Schachbrettmusters aus verschiedenen Orientierungen aufgenommen werden und die Kameraparameter Brennweite, Schnittpunkt der optischen Achse mit der Bildebene sowie radiale und tangentiale Verzerrung bestimmt werden.

3. Verfahren nach einem der Ansprüche 1 bis 2,
   **dadurch gekennzeichnet,**
   **dass** bei der Bildaufnahme bei jeder Aufnahmeposition zwei Bilder aufgenommen werden, wobei die Basis *b* so groß gewählt wird, dass die Blattscheiben im linken und im rechten Bild sichtbar sind.

4. Verfahren nach einem der Ansprüche 1 bis 3,
   **dadurch gekennzeichnet,**
   **dass** bei der Schwellwertsegmentierung Binärmasken ($M_t$) durch Anwendung eines Minimal- und eines Maximalschwellenwerts erzeugt werden, wobei diese Werte durch schrittweises Variieren und Vergleichen der erzeugten Binärmaske mit den visuell erkennbaren Begrenzungen der Blattscheibe bestimmt werden.

5. Verfahren nach einem der Ansprüche 1 bis 4,
   **dadurch gekennzeichnet,**
   **dass** bei der Randbereinigung die Zunahme der Pixelanzahl bzw. Pixelfläche mit zunehmendem Abstand r vom Schwerpunkt $c_i$, der Blattscheibe, $\dfrac{\partial A_p}{\partial r}$ verwendet wird, um den Rand der Blattscheibe zu erkennen.

6. Verfahren nach einem der Ansprüche 1 bis 5,
   **dadurch gekennzeichnet,**
   **dass** bei der Erstellung des Disparitätsbildes D mittels des Stereo-Algorithmus für jeden Bildpunkt in einem Bild die Verschiebung des korrespondierenden Punktes im anderen Bild bestimmt wird.

**Claims**

1. Method for measuring the growth of leaf disks of plants, **characterised by** the following steps:

   a) Calibrating a recording system and determining the calibration parameters of the recording system
   b) Recording pictures of at least one stereoscopic pair of a leaf disk with the calibrated recording system
   c) Processing each picture recorded, comprising

      *i*) Segmenting the leaf disk through threshold value segmentation,
      *ii*) Carrying out morphological erosion steps on the segmented pictures,
      *iii*) Carrying out cleaning of the edges to remove the edge of the storage container and recognise the edge of the leaf disk on the morphologically eroded pictures,

   d) Establishing the projected leaf area $A_p$ of the leaf disk from the pictures, which have had the edges cleaned,
   e) Carrying out a 3D reconstruction comprising: drawing up a disparity picture D by means of a stereo algorithm from the pairs of pictures recorded, calculating a 3D surface model using the calibration parameters determined beforehand from the disparity picture,
   f) Smoothing the 3D surface model obtained,
   g) Establishing the 3D area $A_{3D}$ of the leaf disk from the smoothed surface model
   h) Repeating the recording of pictures according to step b) at various times
   i) Drawing up time series of the area established through evaluation of the pictures, which were recorded at various times, according to steps c-g)
   j) Establishing the growth rates of the leaf disks from the time series of areas established.

2. Method according to clam 1,
   **characterised in that**,
   when calibrating the recording system, at least 30 pictures of a checkerboard pattern are recorded from various directions and the camera parameters of focal length, intersection point of the optical axis with the picture plane as well as radial and tangential distortion are determined.

**3.** Method according to one of claims 1 to 2,
   **characterised in that**,
   when recording pictures, two pictures per recording position are recorded, in which the basis *b* is selected to be so large that the leaf disks are visible in the left and right picture.

**4.** Method according to one of claims 1 to 3,
   **characterised in that**,
   when threshold value segmenting, binary masks ($M_1$) are produced by using a minimum and maximum threshold value, in which these values are determined by step by step variation and comparison of the binary masks produced with the visually recognisable limits of the leaf disk.

**5.** Method according to one of claims 1 to 4,
   **characterised in that**,
   when cleaning the edges, the increase in the number of pixels or pixel area with increasing distance r from the centre of mass $c_i$ of the leaf disk, $\dfrac{\partial A_p}{\partial r}$ is used to recognise the edge of the leaf disk.

**6.** Method according to one of claims 1 to 5,
   **characterised in that**,
   when drawing up the disparity picture D by means of the stereo algorithm for each picture point in a picture, the displacement of the corresponding point in another picture is determined.


**Revendications**

**1.** Procédé de mesure de la croissance de disques foliaires de plantes, **caractérisé par** les étapes suivantes :

   a) étalonnage d'un système de saisie et de détermination de paramètres d'étalonnage du système de saisie
   b) prise de vue d'au moins une paire d'images stéréoscopiques d'un disque foliaire avec le système de saisie étalonné,
   c) traitement de chaque image prise comprenant

      i) la segmentation des disques foliaires par segmentation par valeurs seuils
      ii) la réalisation d'étapes d'érosion morphologique sur les images segmentées,
      iii) la réalisation d'un nettoyage des bordures pour éliminer les bords du récipient de conservation et reconnaître le bord du disque foliaire sur les images érodées morphologiquement,

   d) détermination du contenu de la surface foliaire projetée $A_p$ du disque foliaire à partir des images nettoyées
   e) réalisation d'une reconstruction en 3D comprenant : la génération d'une image de disparité D au moyen d'un algorithme stéréoscopique à partir des paires d'images saisies, calcul d'un modèle de surface en 3D sur la base des paramètres d'étalonnage déterminés auparavant à partir de l'image de disparité,
   f) lissage du modèle de surface en 3D obtenu,
   g) détermination du contenu de surface en 3D $A_{3D}$ du disque foliaire à partir du modèle de surface lissé
   h) répétition de la prise de vue selon l'étape b) à des moments différents,
   i) génération de séries temporelles des contenus de surface déterminés par évaluation des prises de vue qui ont été effectuées à des moments différents, selon les étapes c à g)
   j) détermination de la croissance du disque foliaire à partir des séries temporelles des contenus de surface déterminés.

**2.** Procédé selon la revendication 1,
   **caractérisé en ce**
   **que** lors de l'étalonnage du système de saisie, au moins 30 images d'un modèle en échiquier sont prises de diverses orientations et les paramètres de l'appareil tels que distance focale, point d'intersection de l'axe optique avec les plans d'image et distorsion radiale et tangentielle sont déterminés.

**3.** Procédé selon l'une quelconque des revendications 1 à 2,
   **caractérisé en ce**

**que** lors de la prise de vue, pour chaque position de cliché, deux images sont prises, la dimension de la base b étant choisie de telle sorte que les disques foliaires soient visibles sur l'image de gauche et de droite.

4. Procédé selon l'une quelconque des revendications 1 à 3,
   **caractérisé en ce**
   **que** lors de la segmentation par valeurs seuils, des masques binaires ($M_1$) sont générés par utilisation d'une valeur seuil minimale et d'une valeur seuil maximale, ces valeurs étant déterminées en faisant varier et en comparant par étape le masque binaire généré avec les limites reconnaissables visuellement du disque foliaire.

5. Procédé selon l'une quelconque des revendications 1 à 4,
   **caractérisé en ce**
   **que** lors du nettoyage des bordures, on utilise l'augmentation du nombre de pixels ou de la surface de pixels avec l'augmentation de l'intervalle r depuis le centre de gravité ci du disque foliaire $\dfrac{\partial A_p}{\partial r}$ pour reconnaître le disque foliaire.

6. Procédé selon l'une quelconque des revendications 1 à 5,
   **caractérisé en ce**
   **que** lors de la génération de l'image de disparité D au moyen de l'algorithme stéréoscopique, pour chaque point d'image dans une image, le décalage du point correspondant est déterminé dans l'autre image.

**Fig. 1**

Fig. 2

Fig. 3

Fig. 4

Fig. 5

Fig. 6

**Fig. 7**

Fig. 8

**Fig. 9**

Fig. 10

**Fig. 11**

**Fig. 12**

Fig. 13

**Fig. 14**

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BISKUP B. ; SCHARR H. ; SCHURR U. ; RASCHER U.** A stereo imaging system for measuring structural parameters of plant canopies. *Plant, Cell and Environ.,* 2007, vol. 30, 1299-1308
- **DIJKSTRA E.W.** A note on two problems in connexion with graphs. *Numer. Math.,* 1959, vol. 1, 269-271
- Workflow technology. **ELLIS C.A.** Computer Supported Co-operative Work Trends in Software. John Wiley & Sons Ltd, 1999, vol. 7, 29-54
- **FAUGERAS O. ; HOTZ B. ; MATHIEU H. ; VIÉVILLE T. ; ZHANG Z. ; FUA P. ; THERON E. ; MOLL L. ; BERRY G. ; VUILLEMIN J.** Real time correlation-based stereo: algorithm implementations and applications. *Technical Report 2013, INRIA Sophia Antipolis,* 1993
- **GRANIER C. ; AGUIRREZABAL L. ; CHENU K. ; COOKSON S. J. ; DAUZAT M. ; HAMARD P. ; THIOUX J. ; ROLLAND G. ; BOUCHIER-COMBAUD S. ; LEBAUDY A., MULLER B.** PHENOPSIS, an automated platform for reproducible phenotyping of plant responses to soil water deficit in Arabidopsis thaliana permitted the identification of an accession with low sensitivity to soil water deficit. *New Phytol.,* 2006, vol. 169, 623-635
- Digital Image Processing. **JÄHNE B.** Concepts, algorithms, and scientific applications. Springer-Verlag, 2002
- **JENNESS JS.** Calculating landscape surface area from digital elevation models. *Wildlife Society Bulletin,* 2004, vol. 32, 829-839
- **KAMINUMA E. ; HEIDA N. ; TSUMOTO Y. ; YAMAMOTO N. ; GOTO N. ; OKAMOTO N. ; KONAGAYA A. ; MATSUI M. ; TOYODA T.** Automatic quantification of morphological traits via three-dimensional measurement of Arabidopsis. *Plant J.,* 2004, vol. 38, 358-65
- **KLETTE R. ; ZAMPERONI P.** Handbuch der Operatoren für die Bildverarbeitung. Braunschweig-Vieweg, 1995
- **SCHARR H.** Optimal filters for extended optical flow. *International Workshop on Complex Motion (IWCM,* 2004, 14-29
- **RUSS J.C.** The image processing handbook. CRC Press, Inc, 2002
- **WALTER A ; SCHURR U.** The modular character of growth in Nicotiana tabacum plants under steady-state nutrition. *J. Exp. Bot.,* 1999, vol. 50, 1169-1177
- **WALTER A.** Räumliche und zeitliche Wachstumsmuster in Wurzeln und Blättern dikotyler Pflanzen. *Dissertation*
- **WALTER A. ; SCHARR H. ; GILMER F. ; ZIERER R. ; NAGEL K. A. ; ERNST M. ; WIESE A. ; VIRNICH O. ; CHRIST M. M. ; UHLIG B.** Dynamics of seedling growth acclimation towards altered light conditions can be quantified via GROWSCREEN: a setup and procedure designed for rapid optical phenotyping of different plant species. *New Phytol.,* 2007, vol. 174, 447-455
- **ZHANG Z.** Flexible camera calibration by viewing a plane from unknown orientations. *Int. J. Comput. Vision,* 1999, 666-673
- **ZHANG Z.** A flexible new technique for camera calibration. *IEEE T. Pattern Anal.,* 2000, vol. 22, 1330-1334